# EUROPEAN PATENT APPLICATION

(11) **EP 2 642 202 A2**
(43) Date of publication of application: **25.09.2013**
(21) Application number: 13160480.3
(22) Date of filing: 21.03.2013
(51) Int. Cl.: F23D 14/38, F23D 14/40, F23D 14/66, F23D 14/46

(54) **Hot gas torches, hot gas torch systems and hot gas heating methods**

(30) Priority: 23.03.2012 US 201213427993
(71) Applicant: General Electric Company, Schenectady, New York 12345 (US)
(72) Inventor: Hunt, Mark L., Greenville, SC South Carolina 29615 (US)
(74) Representative: Picker, Madeline Margaret

(57) **Abstract**

Hot gas torches include a nozzle 20 that includes an internal conduit 25 that extends between an inlet end 21 and an outlet end 22 and a heating unit 30 disposed external the internal conduit, wherein the heating unit 30 heats the internal conduit 25 such that a gas that enters the internal conduit at the inlet end 21 is heated before it exits the internal conduit at the outlet end 22.

## Description

The subject matter disclosed herein relates to heating materials and, more specifically, to heating materials using a hot gas torch.

Materials are often heated to adjust their performance for a given application. For example, metals and alloys can be heated (e.g., heat treated, annealed, tempered, etc.) to adjust their microstructure so that they become harder, softer, more durable or achieve a variety of other properties specific to that material. Likewise, weld material, braze material and the like can be heated until they become molten so that they can subsequently cool and bond with a substrate component. Such materials can be used to repair cracks, join multiple parts, build up voids in the material or otherwise add new material to a substrate. Non-metals such as ceramic, polymeric, organic or composite materials may also be heated in a variety of applications.

One way to apply heat to a material is through the use of a flame. Blow torches, for example, can bum combustible fuel (e.g., oxyacetylene, acetylene, propane, etc.) proximate to a material to increase its temperature. However, some materials such as various metals and alloys can become oxidized on their surfaces as a result of the combusting fuel. The oxidization can potentially decrease physical or visual performance and/or require subsequent processing to remove oxidized portion. Other materials may degrade combust or otherwise deteriorate when a flame is present. Other heating methods such as arc welding may not be suitable for certain components (e.g., parts with nearby electrical circuits) due to potential arcing to neighboring areas that would damage part of the component. Even other processes may require any heating to occur in an inert atmosphere to limit any contamination of the heating site; however, it may be difficult to contain an entire component in an inert atmosphere due to the component's overall size or shape.

Accordingly, alternative hot gas torches, hot gas torch systems and methods for using the same would be welcome in the art.

In one embodiment, a hot gas torch is provided. The hot gas torch includes a nozzle that includes an internal conduit that extends between an inlet end and an outlet end. The hot gas torch further includes a heating unit disposed external the internal conduit, wherein the heating unit heats the internal conduit such that a gas that enters the internal conduit at the inlet end is heated before it exits the internal conduit at the outlet end.

In another embodiment, a hot gas torch system is provided. The hot gas torch system includes a nozzle that includes an internal conduit that extends between an inlet end and an outlet end and a heating unit disposed external the internal conduit that heats the internal conduit. The hot gas torch system further includes a gas supply connected to the inlet end of the internal conduit such that a gas that enters the inlet end of the internal conduit from the gas supply becomes heated before it exits the outlet end of the internal conduit.

In yet another embodiment, a hot gas heating method is provided. The hot gas heating method includes heating an internal conduit of a nozzle using a heating unit, wherein the internal conduit extends from an inlet end to an outlet end, and wherein the heating unit is disposed external the internal conduit, and passing a gas through the internal conduit such that the gas is heated without combusting as it travels from the inlet end to the outlet end. The hot gas heating method further includes heating a target site of a substrate using the gas that exits the outlet end of the internal conduit.

These and additional features provided by the embodiments discussed herein will be more fully understood in view of the following detailed description, in conjunction with the drawings.

The embodiments set forth in the drawings are illustrative and exemplary in nature and not intended to limit the inventions defined by the claims. The following detailed description of the illustrative embodiments can be understood when read in conjunction with the following drawings, where like structure is indicated with like reference numerals and in which:
FIG. 1 is an exemplary hot gas torch according to one or more embodiments shown or described herein;
FIG. 2 is an exemplary nozzle for a hot gas torch according to one or more embodiments shown or described herein;
FIG. 3 is another exemplary nozzle for a hot gas torch according to one or more embodiments shown or described herein;
FIG. 4 is an exemplary hot gas torch system according to one or more embodiments shown or described herein; and
FIG. 5 is an exemplary hot gas heating method according to one or more embodiments shown or described herein.

One or more specific embodiments of the present invention will be described below. In an effort to provide a concise description of these embodiments, all features of an actual implementation may not be described in the specification. It should be appreciated that in the development of any such actual implementation, as in any engineering or design project, numerous implementation-specific decisions must be made to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill having the benefit of this disclosure.

When introducing elements of various embodiments of the present invention, the articles "a," "an," "the," and "said" are intended to mean that there are one or more of the elements. The terms "comprising," "including," and "having" are intended to be inclusive and mean that there may be additional elements other than the listed elements.

Hot gas torch systems disclosed herein generally comprise a hot gas torch connected to a gas supply. The hot gas torch comprises a nozzle that has an internal conduit for a gas, such as an inert gas, to pass there through. The hot gas torch further comprises a heating unit, such as an induction coil, that heats the internal conduit to an elevated temperature. By heating the internal conduit using the heating unit, gas can become heated as it passes through the nozzle's internal conduit so that it exits at an elevated temperature without the use of combustion. The exiting hot gas may then be directed to heat a variety of different materials for numerous applications.

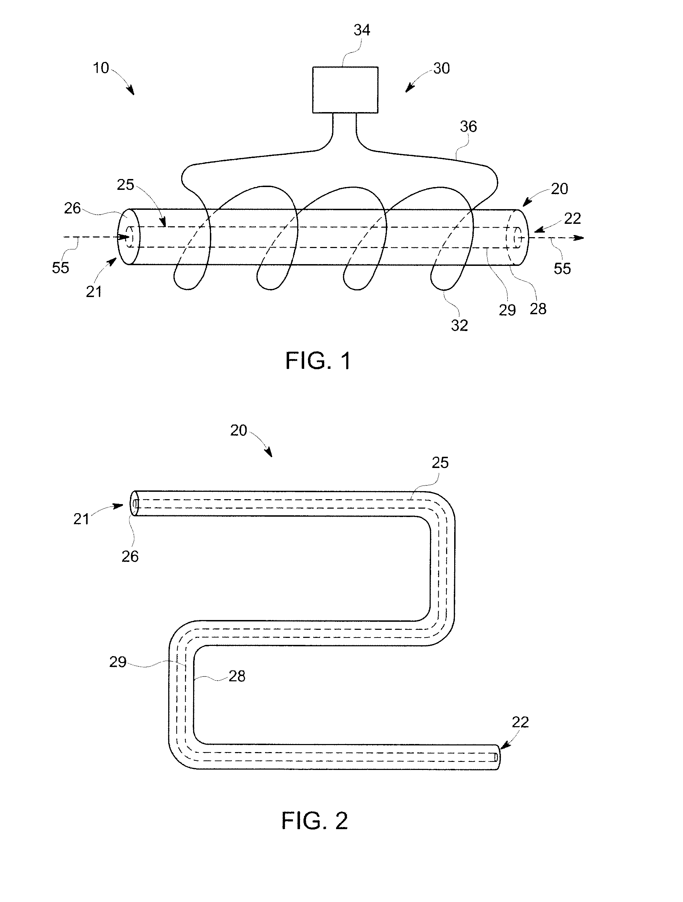

Referring now to FIG. 1, a hot gas torch 10 is illustrated. As discussed above, the hot gas torch 10 comprises a nozzle 20 and a heating unit 30. The nozzle 20 comprises an internal conduit 25 surrounded by a wall 26. The internal conduit 25 extends from an inlet end 21 of the nozzle 20 all the way to an outlet end 22 of the nozzle 20.

The nozzle 20 may comprise any size and shape that allows for the internal conduit 25 to pass there through as will become appreciated herein. For example, in some embodiments, such as that illustrated in FIG. 1, the nozzle 20 may comprise an extended cylinder and the internal conduit 25 may comprise a linear tube passing directly through the nozzle 20. In some embodiments, such as that illustrated in FIG. 2, the nozzle 20 may comprise a non-linear configuration such as a serpentine configuration and the internal conduit 25 may comprise an open tube passing directly through the nozzle 20. Such a configuration may allow for a longer internal conduit 25 for the gas to pass through thereby increasing the dwell time of the gas in the internal conduit 25. In even other embodiments, the nozzle 20 may comprise any other linear or non-linear configuration such as straight, curved, spiraled, switchbacked, or any other geometric or non-geometric configuration or combinations thereof.

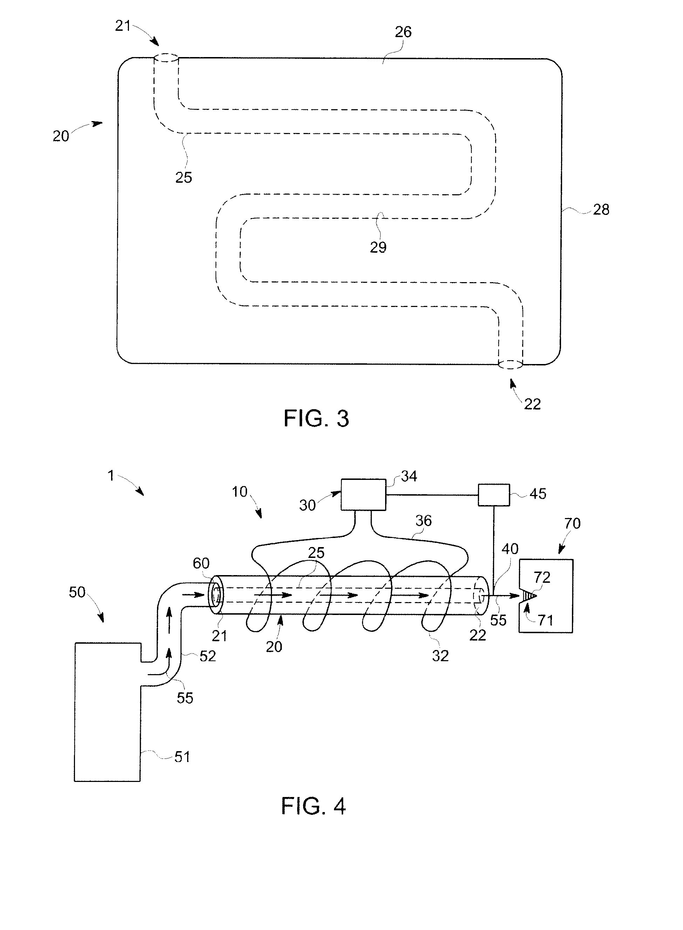

Moreover, the internal conduit 25 may also comprise any size and shape within the nozzle 20. For example, in some embodiments, such as that illustrated in FIGS. 1 and 2, the internal conduit 25 may comprise a direct passageway that is centered within the nozzle 20 for the entire length of the nozzle 20. However, in some embodiments, the internal conduit 25 may alternatively or additionally take on other configurations throughout the nozzle 20 besides a direct passageway through its center. For example, as illustrated in FIG. 3, the internal conduit 25 itself may comprise a non-linear path such as serpentine configuration through the nozzle 20. Such a configuration may allow for a longer internal conduit 25 for the gas to pass through while still using a nozzle 20 with a relatively basic external shape (e.g., cylinder, cube, etc.). In even some embodiments, the internal conduit 25 may comprise any other linear or non-linear configuration such as straight, curved, spiraled, switchbacked, or any other geometric or non-geometric configuration or combinations thereof. The internal conduit 25 and the nozzle 20 may therefore comprise a variety of combinations of size, shapes and configurations to manipulate the dwell time of the gas 55 in the internal conduit 25 (and thus the amount of heat applied to the gas 55 as will become appreciated herein).

Furthermore, the internal conduit 25 may comprise a variety of configurations to manipulate the gas 55 as it exits the outlet end 22. For example, in some embodiments the internal conduit 25 may comprise a tapered configuration for either converging or diverging the gas 55 as it exits. In some embodiments the internal conduit 25 may comprise a plurality of gas outlets (such as in a showerhead configuration) so that the gas 55 exits in a plurality of locations.

Referring to FIGS. 1-3, the nozzle 20 can comprise a variety of wall 26 configurations that allow for an external energy (e.g., heat) to be transferred from the heating unit 30 to the internal conduit 25 of the nozzle 20. For example, the nozzle 20 can comprise a single wall 26 that comprises an outer surface 28 and an inner surface 29 such that the inner surface 29 defines the internal conduit 25 (as illustrated in FIGS. 1-3). Alternatively or additionally, in some embodiments, the nozzle 20 may comprise a plurality of walls 26 that combine to make up the outer surface 28 and the inner surface 29 of the nozzle 20. For example, in some embodiments, the nozzle 20 may comprise an inner wall that makes up the inner surface 29 of the nozzle 20 and an outer wall that surrounds the inner wall and makes up the outer surface 28 of the nozzle 20. In such embodiments, the inner wall and the outer wall may be touching or may be separated from one another (such as by a gap of air). The nozzle 20 may comprise a single wall 26 for its entire length, multiple walls 26 for its entire length or combinations of a single wall 26 and multiple walls 26.

Moreover, in some embodiments, the wall 26 of the nozzle 20 can comprise one or more materials that can be externally heated (i.e., on the outer surface 28 of the nozzle 20) and at least partially transfer some of that heat (or other energy) to the inner surface 29 (and thus the internal conduit 25) of the nozzle 20. For example, in some embodiments, the wall 26 can comprise graphite. In some embodiments, the wall 26 can comprise tungsten. In some embodiments, the wall can comprise different materials or different combinations of materials at different locations. While specific materials have been presented herein, it should be appreciated that these are exemplary only and other materials that allow for the passage of energy (e.g., heat) to the internal conduit may additionally or alternatively be incorporated.

Referring still to FIGS. 1-3, the hot gas torch 10 further comprises a heating unit 30. The heating unit 30 provides energy (e.g., heat) to the nozzle 20 so that the internal conduit 25 becomes heated. The heating unit 30 can comprise a variety of different types of heating systems that can heat the internal conduit 25. For example, in some embodiments, such as that illustrated in FIGS. 1-3, the heating unit 30 can comprise an induction heating unit. In such embodiments the heating unit 30 can comprise an induction coil 32 connected to a power supply 34 by an electrical connection 36. The induction coil 32 can then be positioned proximate the nozzle 20 in a variety of configurations. For example, where the nozzle 20 comprises a straight cylinder, the induction coil 32 can be wrapped around the exterior of the nozzle 20 (as illustrated in FIGS. 1 and 4). Alternatively or additionally, where the nozzle 20 comprises a straight cylinder, the induction coil 32 may not surround the entire circumference of the nozzle 20, but be placed along to just one side of the nozzle 20. Where the nozzle 20 comprises a different non-linear configuration, such as the serpentine configuration illustrated in FIG. 2, the induction coil 32 may be wrapped around the outer perimeter of the entire nozzle 20, or may be wrapped around the length of the nozzle 20 such that the induction coil 32 also follows the serpentine pattern.

In some embodiments, the heating unit 30 can comprise any other device or system that can heat the internal conduit 25. For example, in some embodiments the heating unit 30 can comprise a resistance heating unit. In such embodiments the heating unit 30 can connect to at least part of the nozzle 20 and pass a current there through such that the internal conduit 25 is heated. In other embodiments, the heating unit 30 can comprise a combustible heat source such as a blowtorch. In such embodiments the heat may be applied external the nozzle 20 and transferred from the outer surface 28 to the inner surface 29 in order to heat the internal conduit 25. While specific heating sources have been disclosed herein, it should be appreciated that these are exemplary only and any other heating source may additionally or alternatively be employed to heat the internal conduit 25 and any gas 55 that passes there through.

Referring now to FIGS. 1 and 4, the heating unit 30 may be disposed in a variety of locations external the internal conduit 25. For example, in some embodiments the heating unit 30 can be disposed external the nozzle 20. Such embodiments may be realized when the heating unit 30 comprises an induction coil 32 that is wrapped around the outer surface 28 of the nozzle 20. The induction coil 32 may then radiate heat through the wall 26 to heat the internal conduit 25 such that gas 55 passing through the internal conduit 25 becomes heated. In some embodiments, the heating unit 30 may be integrated with the nozzle 20. Such embodiments may be realized, for example, when the heating unit 30 comprises a resistance heating such that a current is applied directly to the wall 26 of the nozzle. The heating unit 30 may further be disposed across the entire length of the nozzle 20 or across one or more portions of the length of the nozzle 20. Furthermore, the hot gas torch 10 can comprise a single heating unit 30 or a plurality or heating units 30.

Referring now to FIG. 4, the hot gas torch system 1 comprises a gas supply 50 connected to the hot gas torch 10 via a connection 60. The gas supply 50 provides gas 55 to the internal conduit 25 of the nozzle 20. For example, in some embodiments the gas supply 50 can comprise a gas tank 51 and a gas line 52. The gas line 52 can extend from the gas tank 51 to the internal conduit 25 of the hot gas torch 10 and be connected thereto by a connection 60. The connection 60 can comprise any type of connection that allows the gas 55 to flow from the gas line 52 to the internal conduit 25 with no or minimal leakage. For example, the connection 60 can comprise a flange, hose and/or fitting that connects the gas line 52 to the internal conduit 25. Moreover, the gas 55 can comprise any type of gas that can be heated and applied to a target site 71 of a substrate 70. For example, in some embodiments the gas 55 can comprise an inert gas such as nitrogen. In some embodiments the gas 55 may comprise a mixture of different gases.

The gas 55 may thus travel through the internal conduit 25 and become heated prior to exiting the nozzle 20 at the outlet end 22. The temperature of the gas 55 will depend at least in part on the temperature the internal conduit 25 is heated to and the dwell time of the gas 55 in the internal conduit. Thus, to produce a hotter gas, the internal conduit 25 may be heated to a higher temperature, the length of the internal conduit 25 may be increased and/or the flow rate of the gas 55 may be decreased (such as by decreasing the pressure).

Still referring to FIG. 4, the hot gas torch system 1 can comprise a variety of additional equipment to assist in the application of heated gas 55 to the target site 71 of the substrate 70. For example, in some embodiments the hot gas torch system 1 can comprise one or more temperature sensors 40 (e.g., thermocouples, thermometers, pyrometers, etc.) disposed at one or more locations around the hot gas torch 10. The one or more temperature sensors 40 can measure the temperature of the gas 55 proximate the outlet end 22 (e.g., as it passes through and/or exits the internal conduit 25) so that the temperature of the gas 55 applied to the substrate 70 can be monitored. In some embodiments, the one or more temperature sensors 40 may send temperature feedback to a controller 45 that controls the heating unit 30. In such embodiments the controller 45 can adjust the amount of energy (e.g., heat) applied to the internal conduit 25 so that the temperature of the gas 55 leaving the outlet end 22 of the nozzle 20 can be raised or lowered as needed.

In some embodiments the hot gas torch system 1 can comprise other equipment such as one or more shields, grips or other insulating elements to assist in the handling and manipulation of the hot gas torch 10 when applying heated gas 55 to the target site 71 of the substrate 70.

The hot gas torch system 1 comprising the hot gas torch 10 and the gas supply 50 can thus be utilized to apply heated gas 55 to a target site 71 of a substrate 70. The substrate 70 can comprise any metal, alloy, ceramic, polymer, organic or composite material or combinations thereof. In some embodiments the substrate 70 may comprise a worn metal part that has one or more cracks, holes or other sites with missing material that is to be repaired. The target site 71 can comprise any location or locations on the substrate 70 for which heat is to be applied. For example, the target site 71 can comprise a localized area of a substrate 70, or may comprise an entire surface of the substrate 70. The hot gas 55 may then be applied to the target site 71 as it exits the internal conduit 25 of the nozzle 20. Depending on the configuration of the nozzle 20 (e.g., whether the hot gas exits in a single stream or in a variety of streams) and the size and location(s) of the target site 71, the entire target site 71 can be heated simultaneously, or different parts of the target site 71 can be heated at different intervals.

In some embodiments a supplemental material 72 may be disposed at the target site 71 of the substrate 70 such that the supplemental material 72 is heated by the hot gas 55. For example the supplemental material 72 can comprise a filler material (e.g., weld material or braze material) that is disposed at a crack, hole, joint or other location that is to have filler material added. The hot gas 55 can then melt the filler material so that it can subsequently cool and bond with the substrate 70. When the gas 55 comprises an inert gas, such filler material may be melted and bonded with the substrate 70 without oxidizing either the substrate 70 in a localized inert atmosphere or the filler material to provide a strong, clean joint.

The supplemental material 72 may also comprise a variety of other materials depending on the heating application. For example the supplemental material 72 can comprise one or more plastics (such as for shrink wrapping around a substrate 70), paints or coatings (such as for curing the paint or coating on the substrate 70), or other material.

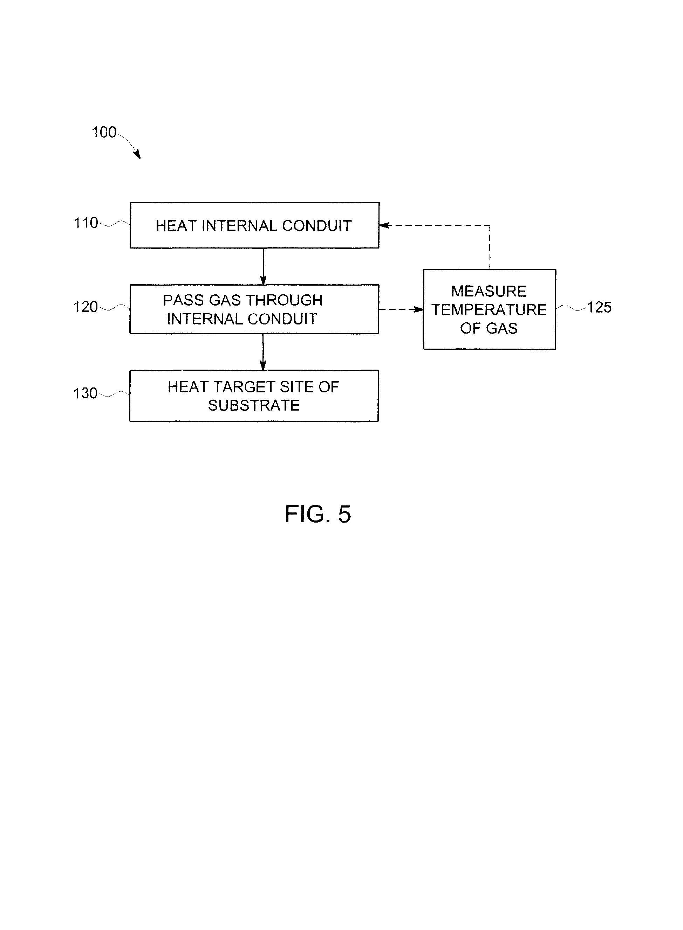

Referring to FIG. 5, a hot gas heating method 100 is illustrated for heating a target site 71 of a substrate 70 such as by using the hot gas torch system 1 discussed above and illustrated in FIGS. 1-5. The hot gas heating method 100 first comprises heating the internal conduit 25 using the heating unit 30 in step 110. As discussed above, a variety of different heating units 30 at a variety of different locations external the internal conduit 25 can be utilized such that the heating unit provides energy (e.g., heat) to the internal conduit 25. The heating of the internal conduit 25 in step 110 may be continuous or be accomplished in one or more intervals of applying energy. Moreover, as also discussed above, the internal conduit 25 may be heated to any temperature necessary to subsequently heat the gas 55 that will pass through the internal conduit 25.

The hot gas heating method 100 further comprises passing gas through the internal conduit 25 such that the gas 55 is heated in step 120. Specifically, the gas 55 is heated as it travels through the internal conduit 25 from the inlet end 21 to the outlet end 22. In some embodiments, passing the gas 55 through the internal conduit 25 occurs after the internal conduit 25 is heated in step 110. In some embodiments, passing the gas 55 through the internal conduit 25 occurs while the internal conduit 25 is being heated in step 110. Moreover, as discussed above, the gas 55 will become heated based at least in part on the temperature of the internal conduit 25 and the dwell time of the gas 55 as it passes through the internal conduit 25. Thus, to increase the temperature of the gas 55 when it exits the outlet end 22 of the internal conduit 25, the internal conduit 25 can be heated to a higher temperature by the heating unit 30 and/or the gas 55 can have a longer dwell time in the internal conduit 25 (such as by increasing the overall length of the internal conduit 25 or decreasing the flow rate of the gas).

In some embodiments, the hot gas heating method 100 may further comprise measuring the temperature of the gas 55 in step 125. The temperature of the gas 55 may be measured proximate the outlet end 22 of the internal conduit 25 to understand the relative amount of heat being applied to the target site 71 of the substrate 70. As illustrated in FIG. 5, the heating of the internal conduit 25 in step 110 may then be controlled based at least in part on the temperature of the gas 55 proximate the outlet end 22 of the internal conduit 25. The heating unit 30 can thereby provide additional energy to the internal conduit 25 if the temperature of the gas 55 is lower than needed and provide less energy to the internal conduit 25 if the temperature of the gas 55 is higher than needed.

Referring to FIGS. 1-5, the hot gas heating method 100 finally comprises heating the target site 71 of the substrate 70 using the gas 55 that exits the outlet end 22 of the internal conduit 25 in step 130. As discussed above, the target site 71 of the substrate can be heated to any necessary temperature and can depend on, among other things, on the type of substrate 70 and/or the presence of any supplemental material 72 at the target site 71. For example, when the substrate 70 comprises an alloy substrate that is being repaired with a weld material or a braze material, the weld material or braze material can be heated above its melting temperature so that it can melt and bond with the substrate 70 at the target site 71.

It should now be appreciated that a hot gas torch may be combined with a gas supply 50 to form a hot gas torch system that can heat a gas 55 without the use of combustion. By passing the gas through the internal conduit of a nozzle that is heated by a heating unit, the gas can become heated during its dwell time in the internal conduit. The heated gas can then exit the outlet end of the nozzle and be directed to a target site of a substrate to heat the part without combusting. Depending on the type of gas used, the hot gas torch system can locally heat a part of substrate with a local inert atmosphere without the need for placing the entire substrate in a vacuum or chamber.

While the invention has been described in detail in connection with only a limited number of embodiments, it should be readily understood that the invention is not limited to such disclosed embodiments. Rather, the invention can be modified to incorporate any number of variations, alterations, substitutions or equivalent arrangements not heretofore described, but which are commensurate with the spirit and scope of the invention. Additionally, while various embodiments of the invention have been described, it is to be understood that aspects of the invention may include only some of the described embodiments. Accordingly, the invention is not to be seen as limited by the foregoing description, but is only limited by the scope of the appended claims.

Various aspects and embodiments of the present invention are defined by the following numbered clauses:
1. A hot gas torch comprising:
   a nozzle comprising an internal conduit that extends between an inlet end and an outlet end; and,
   a heating unit disposed external the internal conduit, wherein the heating unit heats the internal conduit such that a gas that enters the internal conduit at the inlet end is heated before it exits the internal conduit at the outlet end.
2. The hot gas torch of clause 1, wherein the heating unit is disposed external the nozzle.
3. The hot gas torch of any preceding clause, wherein the heating unit comprises an induction heating unit.
4. The hot gas torch of any preceding clause, wherein an induction coil of the induction heating unit is wrapped around an exterior of the nozzle.
5. The hot gas torch of any preceding clause, wherein the nozzle comprises a non-linear configuration.
6. The hot gas torch of any preceding clause, wherein the internal conduit omprises a non-linear path through the nozzle.
7. The hot gas torch of any preceding clause, wherein the outlet end comprises a tapered configuration.
8. The hot gas torch of any preceding clause, wherein the outlet end comprises a plurality of gas outlets.
9. A hot gas torch system comprising:
   a nozzle comprising an internal conduit that extends between an inlet end and an outlet end;
   a heating unit disposed external the internal conduit that heats the internal conduit; and,
   a gas supply connected to the inlet end of the internal conduit such that a gas that enters the inlet end of the internal conduit from the gas supply becomes heated before it exits the outlet end of the internal conduit.
10. The hot gas torch of any preceding clause, wherein the heating unit is disposed external the nozzle.
11. The hot gas torch system of any preceding clause, further comprising a temperature sensor disposed proximate the outlet end of the internal conduit.
12. The hot gas torch system of any preceding clause, wherein a controller controls an amount of heat applied from the heating unit based at least in part on readings from the temperature sensor.
13. The hot gas torch system of any preceding clause, wherein the gas comprises an inert gas.
14. The hot gas torch system of any preceding clause, wherein the gas exits the outlet end of the internal conduit is directed towards a target site of a substrate.
15. The hot gas torch system of any preceding clause, wherein a supplemental material is disposed at the target site of the substrate.
16. The hot gas torch system of any preceding clause, wherein the substrate material comprises a filler material.
17. A hot gas heating method comprising:
   heating an internal conduit of a nozzle using a heating unit, wherein the internal conduit extends from an inlet end to an outlet end, and wherein the heating unit is disposed external the internal conduit;
   passing a gas through the internal conduit such that the gas is heated without combusting as it travels from the inlet end to the outlet end; and,
   directing the gas that is heated as it exits the outlet end of the internal conduit towards a target site of a substrate.
18. The hot gas heating method of any preceding clause, wherein the gas comprises an inert gas such that the target site of the substrate is heated in an inert atmosphere.
19. The hot gas heating method of any preceding clause, wherein a supplemental material is disposed at the target site of the substrate.
20. The hot gas heating method of any preceding clause, wherein heating the internal conduit comprises controlling an amount of heat applied from the heating unit based at least in part on readings from a temperature sensor disposed proximate the outlet end of the internal conduit.

## Claims

1. A hot gas torch (10) comprising:
a nozzle (20) comprising an internal conduit (25) that extends between an inlet end (21) and an outlet end (22); and,
a heating unit (30) disposed external the internal conduit (25), wherein the heating unit (30) heats the internal conduit such that a gas that enters the internal conduit at the inlet end (21) is heated before it exits the internal conduit at the outlet end (22).

2. The hot gas torch of claim 1, wherein the heating unit (30) is disposed external the nozzle.

3. The hot gas torch of claim 1 or claim 2, wherein the heating unit (30) comprises an induction heating unit.

4. The hot gas torch of claim 3, wherein an induction coil (32) of the induction heating unit (30) is wrapped around an exterior of the nozzle (20).

5. The hot gas torch of any preceding claim, wherein the nozzle (20) comprises a non-linear configuration.

6. The hot gas torch of any preceding claim, wherein the internal conduit (25) comprises a non-linear path through the nozzle (20).

7. The hot gas torch of any preceding claim, wherein the outlet end (22) comprises a tapered configuration, and/or a plurality of gas outlets.

8. A hot gas torch system comprising:
the hot gas torch (10) of any preceding claim; and
a gas supply connected to the inlet end (21) of the internal conduit (25) such that a gas that enters the inlet end (21) of the internal conduit from the gas supply becomes heated before it exits the outlet end (22) of the internal conduit.

9. The hot gas torch system of claim 8, further comprising a temperature sensor (40) disposed proximate the outlet end of the internal conduit.

10. The hot gas torch system of claim 9, wherein a controller (45) controls an amount of heat applied from the heating unit (30) based at least in part on readings from the temperature sensor (40).

11. The hot gas torch system of claim 9 or claim 10, wherein the gas comprises an inert gas.

12. The hot gas torch system of claim 9, 10 or 11, wherein the gas exits the outlet end (22) of the internal conduit (25) is directed towards a target site (71) of a substrate (70).

13. The hot gas torch system of claim 12, wherein a supplemental material (72) is disposed at the target site (71) of the substrate (70), wherein the substrate material preferably comprises a filter material.

14. A hot gas heating method comprising:
heating (110) an internal conduit of a nozzle using a heating unit, wherein the internal conduit extends from an inlet end to an outlet end, and wherein the heating unit is disposed external the internal conduit;
passing (120) a gas through the internal conduit such that the gas is heated without combusting as it travels from the inlet end to the outlet end; and,
directing the gas that is heated as it exits the outlet end of the internal conduit towards a target site of a substrate.

15. The hot gas heating method of claim 14, wherein:
the gas comprises an inert gas such that the target site of the substrate is heated in an inert atmosphere; and/or
heating the internal conduit comprises controlling an amount of heat applied from the heating unit based at least in part on readings from a temperature sensor disposed proximate the outlet end of the internal conduit.
